# EUROPEAN PATENT APPLICATION

(11) **EP 4 368 418 A1**
(43) Date of publication of application: **15.05.2024**
(21) Application number: 23206611.8
(22) Date of filing: 30.10.2023
(51) Int. Cl.: B60C 23/04, B60C 23/06, G06N 3/00

(54) **SENSOR FAILURE DETERMINATION APPARATUS, SENSOR FAILURE DETERMINATION METHOD, AND TIRE PHYSICAL INFORMATION ESTIMATION**

(30) Priority: 10.11.2022 JP 2022180179; 14.11.2022 JP 2022182011
(71) Applicant: Toyo Tire Corporation, Itami-shi, Hyogo 664-0847 (JP)
(72) Inventor: Hiroshige, Hasegawa, Hyogo, 664-0847 (JP)
(74) Representative: Müller-Boré & Partner Patentanwälte PartG mbB

(57) **Abstract**

A sensor failure determination apparatus (40) includes a data acquisition unit (41), an arithmetic processing unit (42), and a determination unit (43). The data acquisition unit (41) acquires data for a physical quantity measured by a sensor (20) attached to a tire (10). The arithmetic processing unit (42) includes a coding unit that generates feature amount data by applying a convolutional operation to the data acquired by the data acquisition unit (41), and a decoding unit that applies an inverse operation to the feature amount data to reproduce data. The determination unit (43) determines whether the sensor (20) has failed based on the data acquired by the data acquisition unit (41) and the data reproduced by the arithmetic processing unit (42).

## Description

The present invention relates to sensor failure determination apparatuses, sensor failure determination methods, tire physical information estimation systems, and tire physical information estimation methods.

Recently, studies have been conducted on systems configured to input information measured in a tire, a vehicle, etc. to a learning type arithmetic operation model to estimate tire physical information such as a tire force.

Patent literature 1 discloses a tire physical information estimation system according to the related art. A tire physical information estimation system includes a physical information estimation unit and a data acquisition unit. The physical information estimation unit includes a learning type arithmetic operation model including an input layer through an output layer for estimation of physical information related to a tire produced in association with the movement of the tire. The data acquisition unit acquires input data input to the input layer. The arithmetic operation model includes a feature extraction unit that executes a convolutional operation in an operation halfway between the input layer and the output layer to extract a feature amount.

[Patent literature 1] Japanese Patent Application Publication No. 2021-46080

In the tire physical information estimation system according to patent literature 1, tire physical information is estimated based on a physical quantity measured by a sensor provided in the tire. When the sensor fails, the tire physical information estimation system will continue to estimate incorrect tire physical information. We have therefore thought that it is necessary to determine whether the sensor has failed.

The first invention addresses the issue described above, and a purpose thereof is to provide a sensor failure determination apparatus and a sensor failure determination method capable of determining a failure of a sensor provided in a tire.

Another problem in the conventional tire physical information estimation system is that, if the sensor stops operating normally due to a failure or battery exhaustion, incorrect tire physical information continues to be estimated.

The second invention addresses the issue described above, and a purpose thereof is to provide a tire physical information estimation system and a tire physical information estimation method capable of continuing to estimate physical information related to the tire even when some sensors fail.

One embodiment of the first invention relates to a sensor failure determination apparatus. The sensor failure determination apparatus includes: a data acquisition unit that acquires data for a physical quantity measured by a sensor attached to a tire; an arithmetic processing unit that includes a coding unit that generates feature amount data by applying a convolutional operation to the data acquired by the data acquisition unit, and a decoding unit that applies an inverse operation to the feature amount data to reproduce data; and a determination unit that determines whether the sensor has failed based on the data acquired by the data acquisition unit and the data reproduced by the arithmetic processing unit.

Another embodiment of the first invention relates to a sensor failure determination method. The sensor failure determination method includes: data acquisition acquiring data for a physical quantity measured by a sensor attached to a tire; arithmetic processing that includes coding that generates feature amount data by applying a convolutional operation to the data acquired by the data acquisition, and decoding that applies an inverse operation to the feature amount data to reproduce data; and sensor failure determination that determines whether the sensor has failed based on the data acquired by the data acquisition and the data reproduced by the arithmetic processing.

An embodiment of the second invention relates to a tire physical information estimation system. The tire physical information estimation system includes: a data acquisition unit that acquires data for a physical quantity measured by sensors attached to a plurality of tires attached to a vehicle; a physical information estimation unit that receives an input of the data acquired by the data acquisition unit and uses an arithmetic operation model that has been trained for each tire to estimate, for a given tire and a further tire, tire physical information produced in association with a movement of the tire; and a sensor failure information acquisition unit that acquires information indicating whether a sensor has failed, wherein the physical information estimation unit estimates the tire physical information on the tire equipped with the sensor, for which the sensor failure information acquisition unit has acquired information indicating a failure, based on the arithmetic operation model in the tire equipped with the sensor, for which information indicating an absence of failure is acquired.

Another embodiment of the second invention relates to a tire physical information estimation method. The tire physical information estimation method includes: data acquisition acquiring data for a physical quantity measured by sensors attached to a plurality of tires attached to a vehicle; physical information estimation receiving an input of the data acquired by the data acquisition and using an arithmetic operation model that has been trained for each tire to estimate, for a given tire and a further tire, tire physical information produced in association with a movement of the tire; and sensor failure information acquisition acquiring information indicating whether a sensor has failed, wherein the physical information estimation estimates the tire physical information on the tire equipped with the sensor, for which the sensor failure information acquisition has acquired information indicating a failure, based on the arithmetic operation model in the tire equipped with the sensor, for which information indicating an absence of failure is acquired.

A tire physical information estimation according to another embodiment of the second invention includes: a data acquisition unit that acquires data for a physical quantity measured by a sensor attached to a given tire attached to a vehicle; and a physical information estimation unit that receives an input of the data acquired by the data acquisition unit and uses a trained arithmetic operation model to estimate, for the given tire and a further tire, tire physical information produced in association with a movement of the tire.

According to the first invention, a failure of a sensor provided in a tire can be determined. According to the second invention, physical information related to the tire can be continuously estimated even when some sensors fail.
Fig. 1 is a schematic diagram showing an outline of a tire physical information estimation system that includes a sensor failure determination apparatus according to an embodiment 1;
Fig. 2 is a block diagram showing a functional configuration of the tire physical information estimation apparatus;
Fig. 3 is a schematic diagram showing a configuration of the arithmetic operation model;
Fig. 4 is a block diagram showing a functional configuration of the sensor failure determination apparatus;
Fig. 5 is a schematic diagram showing a configuration of the arithmetic operation model;
Fig. 6 is a flowchart illustrating a sequence of steps in the process of determining a sensor failure by the sensor failure determination apparatus;
Fig. 7 is a graph showing input data for acceleration measured by the normally operating sensor;
Fig. 8 is a graph showing reproduced data calculated by the arithmetic operation model by referring to the input data of Fig. 7;
Fig. 9 is a graph showing the input data for acceleration measured by the failed sensor;
Fig. 10 is a graph showing reproduced data calculated by the arithmetic operation model by referring to the input data of Fig. 9;
Fig. 11 is a schematic diagram showing an outline of the tire physical information estimation system according to embodiment 2;
Fig. 12 is a block diagram showing a functional configuration of the tire physical information estimation apparatus;
Fig. 13 is a schematic diagram showing a configuration of the arithmetic operation model;
Fig. 14 is a flowchart showing a sequence of steps of the tire physical information estimation process executed by the tire physical information estimation apparatus;
Fig. 15 is an exemplary diagram showing correlation between the estimated value and the measured value of the tire force Fy of the tire of the left front wheel calculated by the arithmetic operation model of the tire of the left front wheel;
Fig. 16 is an exemplary diagram showing correlation between the estimated value and the measured value of the tire force Fy of the tire of the left front wheel calculated by the arithmetic operation model of the tire of the right front wheel; and
Fig. 17 is a table showing average absolute errors between the estimated values and the measured values of the tire forces F of all tires calculated by the arithmetic operation models corresponding to the respective tires of the vehicle.

Identical or like constituting elements and members shown in the drawings are represented by identical symbols, and a duplicate description will be omitted as appropriate. The dimension of members in the drawings shall be enlarged or reduced as appropriate to facilitate understanding. Those of the members that are not important in describing the embodiment are omitted from the drawings.

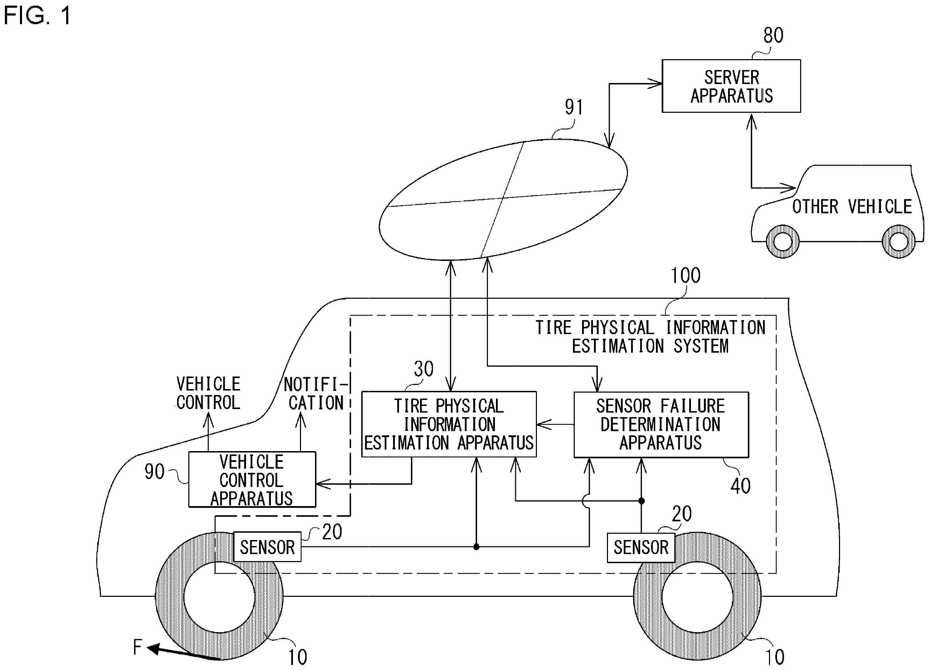

(Embodiment 1) The first invention will be described based on a preferred embodiment with reference to Figs. 1 through 10.

Fig. 1 is a schematic diagram showing an outline of a tire physical information estimation system 100 that includes a sensor failure determination apparatus 40 according to embodiment 1. The tire physical information estimation system 100 includes a sensor 20 provided in a tire 10, a tire physical information estimation apparatus 30, and a sensor failure determination apparatus 40. Further, the tire physical information estimation system 100 may include a server apparatus 80, etc. for acquiring and collecting, via a communication network 91, tire physical information such as tire forces F and moments around three axes produced in the tires 10, which are estimated by the tire physical information estimation apparatus 30, to monitor tire physical information.

The sensor 20 measures a physical quantity of the tire 10 such as the acceleration and strain, tire inflation pressure, and tire temperature of the tire 10 and outputs measured data to the tire physical information estimation apparatus 30 and the sensor failure determination apparatus 40.

The tire physical information estimation apparatus 30 estimates the tire physical information based on the data measured by the sensor 20. The tire physical information estimation apparatus 30 uses the data measured by the sensor 20 in an operation to estimate the tire physical information but may acquire, from a vehicle control apparatus 90, etc., information from the vehicle side such as vehicle acceleration and use the information in the operation to estimate the tire physical information.

The tire physical information estimation apparatus 30 outputs the estimated tire physical information such as the tire forces F and the moments around the three axes produced in the tire 10 to, for example, the vehicle control apparatus 90. The vehicle control apparatus 90 uses the tire physical information input from the tire physical information estimation apparatus 30 for, for example, estimation of a braking distance, application to vehicle control, and notification given to the driver of information related to safe driving of the vehicle. The vehicle control apparatus 90 can also use map information, weather information, etc. to provide information related to future safe driving of the vehicle. In the case the vehicle control apparatus 90 has a function of driving the vehicle automatically, the tire physical information estimation system 100 provides the estimated tire physical information to the vehicle control apparatus 90 as data for use in vehicle speed control, etc. in automatic driving.

The sensor failure determination apparatus 40 determines whether the sensor 20 has failed based on the data measured by the sensor 20 and notifies the tire physical information estimation apparatus 30, the server apparatus 80, etc. of a determination result. The sensor failure determination apparatus 40 determines whether the sensor 20 has failed by an arithmetic operation model that codes and decodes the data measured by the sensor 20 by using a convolutional operation.

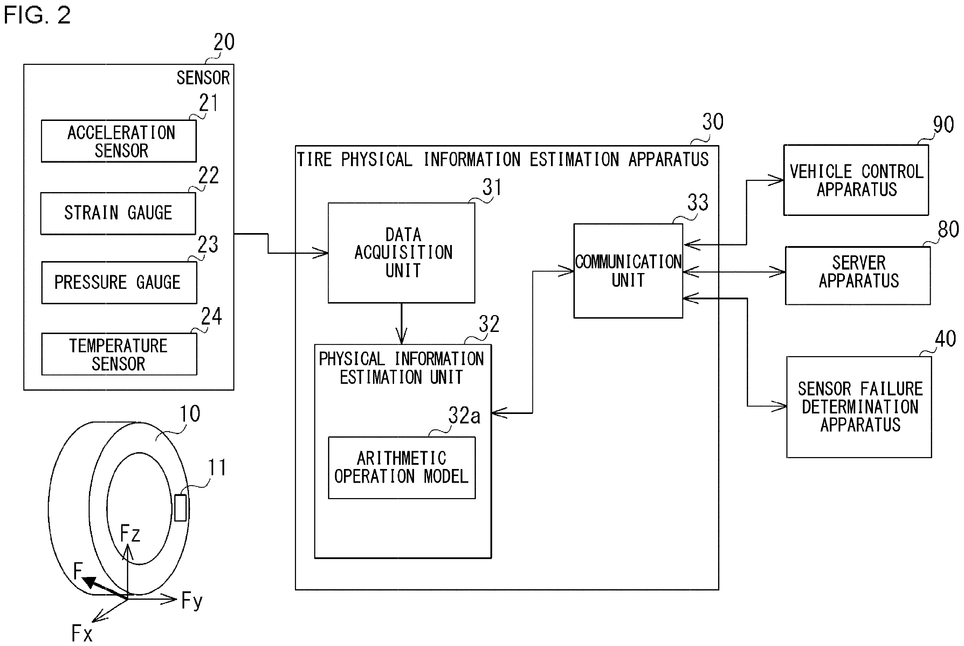

Fig. 2 is a block diagram showing a functional configuration of the tire physical information estimation apparatus 30. The sensor 20 includes an acceleration sensor 21, a strain gauge 22, a pressure gauge 23, a temperature sensor 24, etc. and measures the physical quantity of the tire 10. These sensors measure, as the physical quantity of the tire 10, the physical quantity related to the deformation and movement of the tire 10.

The acceleration sensor 21 and the strain gauge 22 move mechanically along with the tire 10 and measure the acceleration and amount of strain produced in the tire 10, respectively. The acceleration sensor 21 is provided in, for example, the tread, side, and bead of the tire 10, in the wheel, etc. and measures the acceleration in the three axes, i.e., the circumferential, axial, and radial directions in the tire 10.

The strain gauge 22 is provided in the tread, side, bead, etc. of the tire 10 and measures the strain at the location of provision. Further, the pressure gauge 23 and the temperature sensor 24 are provided in, for example, the air valve of the tire 10 and measure the tire inflation pressure and tire temperature, respectively. The temperature sensor 24 may be provided directly in the tire 10 to measure the temperature of the tire 10 accurately. An RFID 11, etc. to which unique identification information is assigned may be attached to the tire 10 to identify each tire.

The tire physical information estimation apparatus 30 includes a data acquisition unit 31, a physical information estimation unit 32, and a communication unit 33. The tire physical information estimation apparatus 30 is an information processing apparatus such as a personal computer (PC). The units in the tire physical information estimation apparatus 30 can be realized in hardware by an electronic element such as a CPU of a computer, a machine component or the like, and in software by a computer program or the like. Fig. 2 depicts functional blocks implemented by the cooperation of these units. Therefore, it will be understood by those skilled in the art that the functional blocks may be implemented in a variety of manners by a combination of hardware and software.

The data acquisition unit 31 acquires, by wireless communication, etc., information on the acceleration, strain, inflation pressure, and temperature measured by the sensor 20. The communication unit 33 communicates with an external apparatus such as the vehicle control apparatus 90 and the server apparatus 80 by wire or wirelessly. The communication unit 33 transmits the physical quantity of the tire 10 measured by the sensor 20 and the tire physical information etc. estimated for the tire 10, etc. to the external device via a communication line (e.g., a control area network (CAN)), the Internet, etc.).

The physical information estimation unit 32 includes an arithmetic operation model 32a, inputs the information from the data acquisition unit 31 to the arithmetic operation model 32a, and estimates the tire physical information such as the tire forces F and the moments around three axes produced in the tire 10. As shown in Fig. 2, the tire force F has components in the three axial directions, i.e., a longitudinal force Fx in the longitudinal direction of the tire 10, a lateral force Fy in the lateral direction, and a load Fz in the vertical direction. The physical information estimation unit 32 may calculate all of these components in the three axial directions, calculate one of the components, or calculate an arbitrary combination of two components.

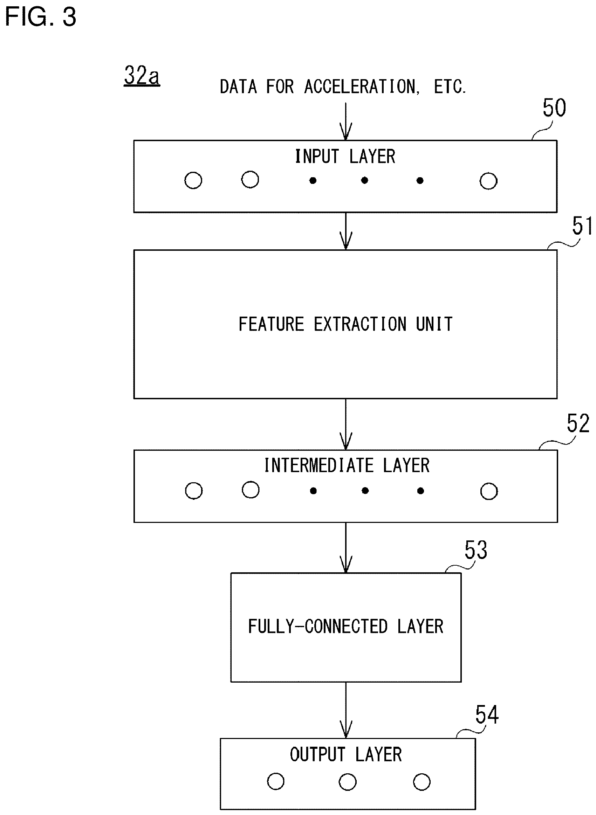

A learning type model such as a neural network is used for the arithmetic operation model 32a. Fig. 3 is a schematic diagram showing a configuration of the arithmetic operation model 32a. The arithmetic operation model 32a is of a convolutional neural network (CNN) type and is a learning type model provided with convolutional operation and pooling operation used in the so-called LeNet, which is a prototype of CNN. Fig. 3 shows an example in which acceleration data in the three axial directions is used as the input data input to the arithmetic operation model 32a, and the tire forces in the three axial directions are output.

The arithmetic operation model 32a includes an input layer 50, a feature extraction unit 51, an intermediate layer 52, a fully-connected unit 53, and an output layer 54. Time series data for acceleration in the three axial directions acquired by the data acquisition unit 31 is input to the input layer 50. The acceleration data is measured by the sensor 20 on a time-series basis. Data for a predetermined time segment is extracted by a window function for use as the input data.

Acceleration measured in the tire 10 exhibits periodicity per rotation of the tire 10. The time segment of input data extracted by the window function may, for example, be a period of time corresponding to the period of rotation of the tire 10 to impart the input data itself with a periodicity. The window function may extract input data in a time segment shorter or longer than one rotation of the tire 10. The arithmetic operation model 32a can be trained so long as the extracted input data at least includes periodical information.

The feature extraction unit 51 extracts a feature amount by using a convolutional operation, a pooling operation, etc. and transmits the feature amount to the nodes of the intermediate layer 52. The feature amount extraction unit 51 executes a convolutional operation by applying a plurality of filters to the input data. The convolutional operation executes the convolutional operation by moving the filter relative to the time series input data such as acceleration data. In the pooling operation, the data from the convolutional operation is subjected to a maximum pooling operation that, for example, selects the larger of the two values arranged in a time sequence. The feature extraction unit 51 extracts a feature amount by repeating a convolutional operation, a pooling operation, etc.

The fully-connected unit 53 fully connects the data from the nodes of the intermediate layer 52 in one of a plurality of layers and outputs the tire forces Fx, Fy, and Fz to the nodes of the output layer 54. The fully-connected unit 53 executes an operation via fully-connected paths on which weighted liner operation, etc. is executed. In addition to a linear operation, the fully-connected unit 53 may execute a non-linear operation by using an activating function, etc.

In addition to the tire forces in the three axial directions, the tire physical information such as moments around the three axes produced in the tire 10 may be output to the nodes of the output layer 54. Of the tire physical information such as the tire forces in the three axial directions and the moments around the three axes produced in the tire 10, the output layer 54 may output one type of tire physical information or an arbitrary combination of a plurality of types of tire physical information.

Further, the arithmetic operation model 32a can be trained by mounting, to an actual vehicle, the tire 10 of a specification adapted to the vehicle and by test driving the vehicle. The specification of the tire 10 includes information related to tire performance such as tire size, tire width, tire profile, tire strength, tire outer diameter, road index, and year/month/date of manufacturing.

The server apparatus 80 acquires, from the tire physical information estimation apparatus 30, the physical quantity of the tire 10 measured by the sensor 20 and the tire physical information such as the tire forces F and the moments around the three axes produced in the tire 10, which are estimated for the tire 10. The server apparatus 80 may collect, from a plurality of vehicles, the physical quantity measured in the tire 10 and the tire physical information estimated by the tire physical information estimation apparatus 30.

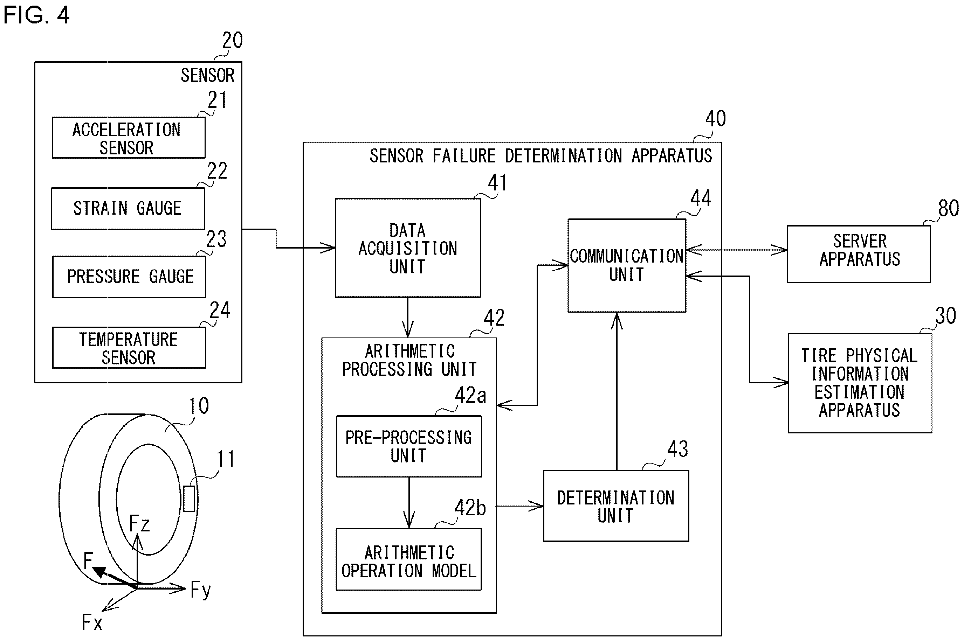

Fig. 4 is a block diagram showing a functional configuration of the sensor failure determination apparatus 40. As described above, the sensor 20 includes the acceleration sensor 21, the strain gauge 22, the pressure gauge 23, the temperature sensor 24, etc. and measures the physical quantity of the tire 10.

The sensor failure determination apparatus 40 includes a data acquisition unit 41, an arithmetic processing unit 42, a determination unit 43, and a communication unit 44. The sensor failure determination apparatus 40 is an information processing apparatus such as a personal computer (PC). The units in the sensor failure determination apparatus 40 can be realized in hardware by an electronic element such as a CPU of a computer, a machine component or the like, and in software by a computer program or the like. Fig. 4 depicts functional blocks implemented by the cooperation of these units. Therefore, it will be understood by those skilled in the art that the functional blocks may be implemented in a variety of manners by a combination of hardware and software.

The data acquisition unit 41 acquires, by wireless communication, etc., data for the acceleration, strain, inflation pressure, and temperature measured by the sensor 20 and outputs the data to a pre-processing unit 42a of the arithmetic processing unit 42. The communication unit 44 communicates with an external apparatus such as the tire physical information estimation apparatus 30 and the server apparatus 80 by wire or wirelessly. The communication unit 44 transmits a determination result indicating whether the sensor 20 has failed to the external apparatus.

The arithmetic processing unit 42 includes a pre-processing unit 42a and an arithmetic operation model 42b. The pre-processing unit 42a normalizes the data input from the data acquisition unit 41 and outputs the normalized data to the arithmetic operation model 42b. Normalization in the pre-processing unit 42a will be described by using an example in which the input data is acceleration data Tx, Ty, and Tz in the three axial directions. The acceleration data Tx, Ty and Tz indicate acceleration in the circumferential, axial (axle direction), and radial directions in the tire 10, respectively.

When the acceleration data Tx generated during vehicle travel is -0.2 G or more and 0.2 G or less, for example, the pre-processing unit 42a divides the acceleration data Tx by a constant value of 0.2 and outputs normalized acceleration data Txn. When the acceleration data Ty generated during vehicle travel is -0.1 G or more and 0.1 G or less, the pre-processing unit 42a divides the acceleration data Ty by a constant value of 0.1 and outputs normalized acceleration data Tyn.

Further, when the acceleration data Tz generated during vehicle travel is -0.8 G or more and 1 G or less, the pre-processing unit 42a subtracts a median value of 0.1 from the acceleration data Tz, divides the result by a constant value of 0.9, and outputs normalized acceleration data Tzn. Through these processes, the pre-processing unit 42a outputs the normalized acceleration data Txn, Tyn and Tzn as values in a range -1 or more and 1 or less.

Normalization related to physical quantity measured in the tire 10 such as acceleration in the three axial directions and strain is not limited to the above-described example and can be appropriately set according to the nature of the physical quantity measured in the tire 10, the range of possible values, etc.

The pre-processing unit 42a may not execute normalization if, for example, only the acceleration data for one of the three axes is the input data input to the arithmetic operation model 42b. The pre-processing unit 42a executes normalization when the physical quantity in at least two of the three axial directions in the tire 10 is measured in the tire 10 and is input to the arithmetic operation model 42b.

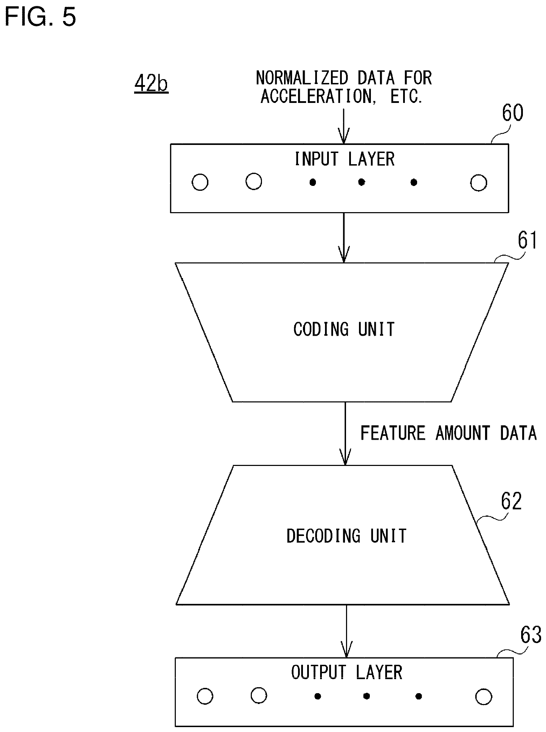

An autoencoder type learning model that uses a convolutional operation, etc. is used as the arithmetic operation model 42b. Fig. 5 is a schematic diagram showing a configuration of the arithmetic operation model 42b. The arithmetic operation model 42b receives, for example, an input of normalized acceleration data in the three axial directions, generates feature amount data by using a convolutional operation, and restores the input data by an inverse operation.

The arithmetic operation model 42b includes an input layer 60, a coding unit 62, and an output layer 63. Normalized time series data for acceleration in the three axial directions output from the pre-processing unit 42a is input to the input layer 60. The acceleration data is measured by the sensor 20 on a time-series basis. Data for a predetermined time segment is extracted by a window function for use as the input data.

Acceleration measured in the tire 10 exhibits periodicity per rotation of the tire 10. The time segment of input data extracted by the window function may be a period of time corresponding to the period of rotation of the tire 10 to impart the input data itself with a periodicity. The window function may extract input data in a time segment shorter or longer than one rotation of the tire 10. The extracted input data may at least include periodical information.

The coding unit 61 generates feature amount data by using a convolutional operation, a pooling operation, etc. The coding unit 61 executes a convolutional operation by applying a plurality of filters to the input data. The convolutional operational executes the convolutional operational by moving the filter relative to the time series input data such as acceleration data. In the pooling operation, the data from the convolutional operational is subjected to a maximum pooling operation that, for example, selects the larger of the two values arranged in a time sequence. The coding unit 61 generates feature amount data by repeating a convolutional operation, a pooling operation, etc.

By referring to the feature amount data generated by the coding unit 61, the decoding unit 62 reproduces the input data by using an inverse operation of the operation of the coding unit 61 and outputs the reproduced data to the output layer 63. The inverse operation executed by the decoding unit 62 is called transpose convolution or deconvolution.

While the coding unit 61 downsamples the input data to generate feature amount data, the decoding unit 62 executes an inverse operation of upsampling the feature amount data to reproduce the input data. The decoding unit 62 may use a method according to up convolution as an operation equivalent to transpose convolution.

The arithmetic operation model 42b can be trained without a supervisor by being trained to approximate the data input to the input layer 60 and the data output from the output layer 63. The arithmetic operation model 42b is trained while the sensor 20 such as the acceleration sensor 21 is operating normally. When the sensor 20 fails due to an excessive vibration applied to the sensor 20, etc., the data input to the input layer 60 will be different from the data in normal operation, and the trained arithmetic operation model 42b will reproduce and output data having errors increased as compared to the input data.

Referring back to Fig. 4, the determination unit 43 determines whether the sensor 20 has failed based on the input data input to the input layer 60 of the arithmetic operation model 42b and the reproduced data output from the output layer 63. The determination unit 43 determines that the sensor 20 is operating normally when a sum of the absolute values of errors between the input data input to the input layer 60 and the reproduced data output from the output layer 63 is less than a predetermined threshold value. The determination unit 43 determines that the sensor 20 has failed when the sum of the absolute values of errors between the input data input to the input layer 60 and the reproduced data output from the output layer 63 is equal to or greater than the predetermined threshold value.

When the input data is acceleration data in the three axial directions in the tire 10, the determination unit 43 may calculate the sum of the absolute values of errors between the input data input to the input layer 60 and the reproduction data output from the output layer 63 for each axial direction and may make a determination for each axial direction. Alternatively, the determination unit 43 may make one comprehensive determination by calculating the sum of the absolute values of errors between the input data input to the input layer 60 and the reproduced data output from the output layer 63 for each axial direction and, further, by adding up all calculated sums for the respective axes. Even when the input data is acceleration data in two of the three axial directions in the tire 10, the determination unit 43 may similarly make a determination for each axis or make one comprehensive determination.

The server apparatus 80 may acquire and accumulate determination results indicating whether the sensor 20 has failed from the sensor failure determination apparatus 40. Further, the tire physical information estimation apparatus 30 acquires a determination result indicating whether the sensor 20 has failed. When the sensor 20 has failed, the tire physical information estimation apparatus 30 stops the process of estimating tire physical information, or, if there is an alternative estimation process, switches to that estimation process. The tire physical information estimation apparatus 30 may output the failure of the sensor 20 to the vehicle control apparatus 90, and the vehicle control apparatus 90 may notify the driver of the failure of the sensor 20.

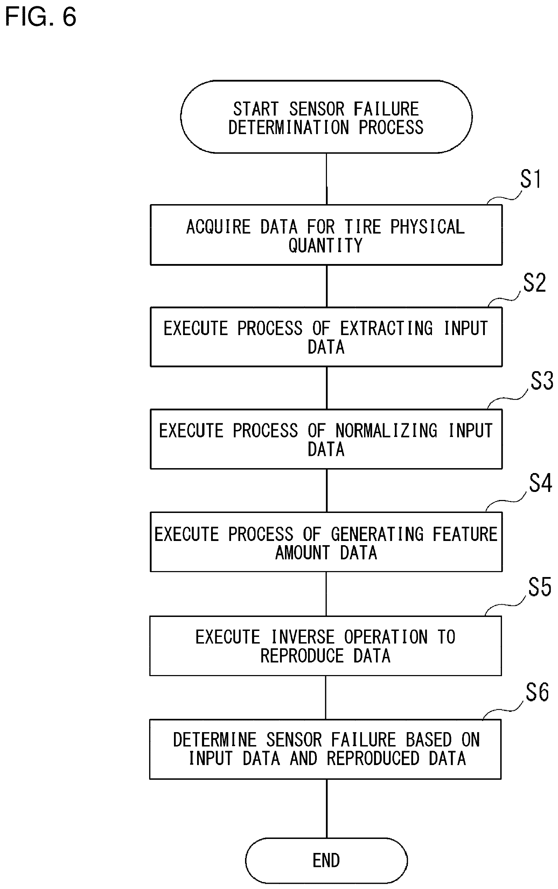

A description will now be given of the operation of the sensor failure determination apparatus 40. Fig. 6 is a flowchart illustrating a sequence of steps in the process of determining a sensor failure by the sensor failure determination apparatus 40. The sensor failure determination apparatus 40 acquires data for physical quantities such as acceleration, strain, tire inflation pressure, and tire temperature in the tire 10 measured by the sensor 20, by using the data acquisition unit 41 (S1).

The arithmetic processing unit 42 executes a process of extracting input data in a predetermined time segment from the data acquired by the data acquisition unit 41 (S2). The pre-processing unit 42a normalizes the input data (S3). The normalized input data is input to the input layer 60 of the arithmetic operation model 42b.

The coding unit 61 of the arithmetic operation model 42b executes a process of generating feature amount data by a convolutional operation and a pooling operation applied to the input data (S4). The decoding unit 62 of the arithmetic operation model 42b executes an inverse operation of coding on the feature amount data generated by the coding unit 61 to reproduce the data (S5).

The determination unit 43 makes a determination on the failure of the sensor 20 based on the input data input to the arithmetic operation model 42b and the reproduced data output by the decoding unit 62 (S6) and ends the process.

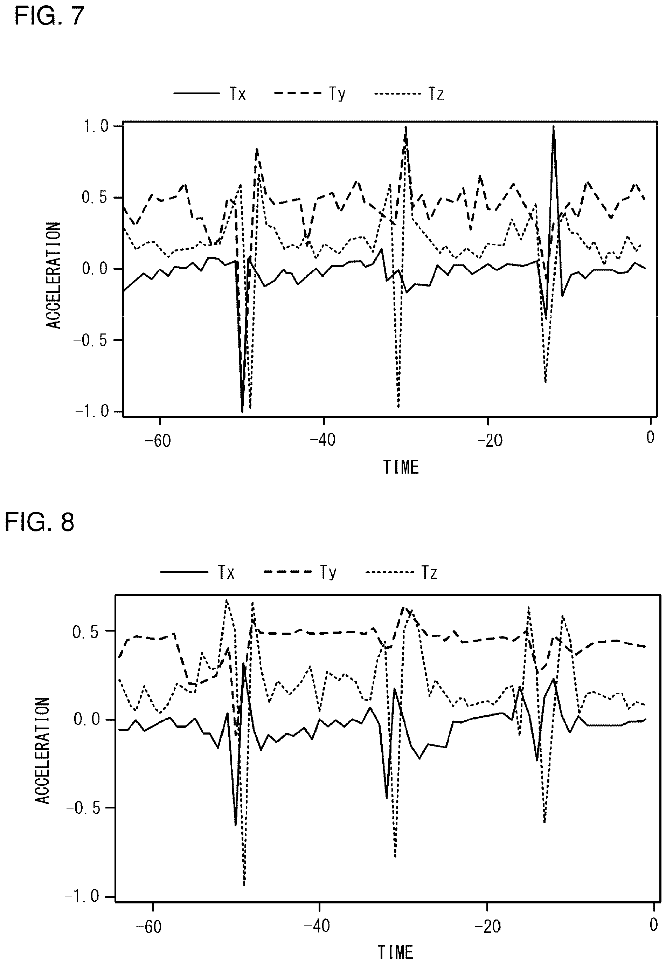

Fig. 7 is a graph showing input data for acceleration measured by the normally operating sensor 20, and Fig. 8 is a graph showing reproduced data calculated by the arithmetic operation model 42b by referring to the input data of Fig. 7. The input data shown in Fig. 7 is normalized acceleration data Tx, Ty and Tz in the three axial directions. In the arithmetic operation model 42b, feature amount data is generated by a convolutional operation in the coding unit 61, and the data is reproduced by an inverse operation. For this reason, as shown in Fig. 8, characteristics of waveform fluctuations in each input data are reflected in the reproduction data when the input data is normal.

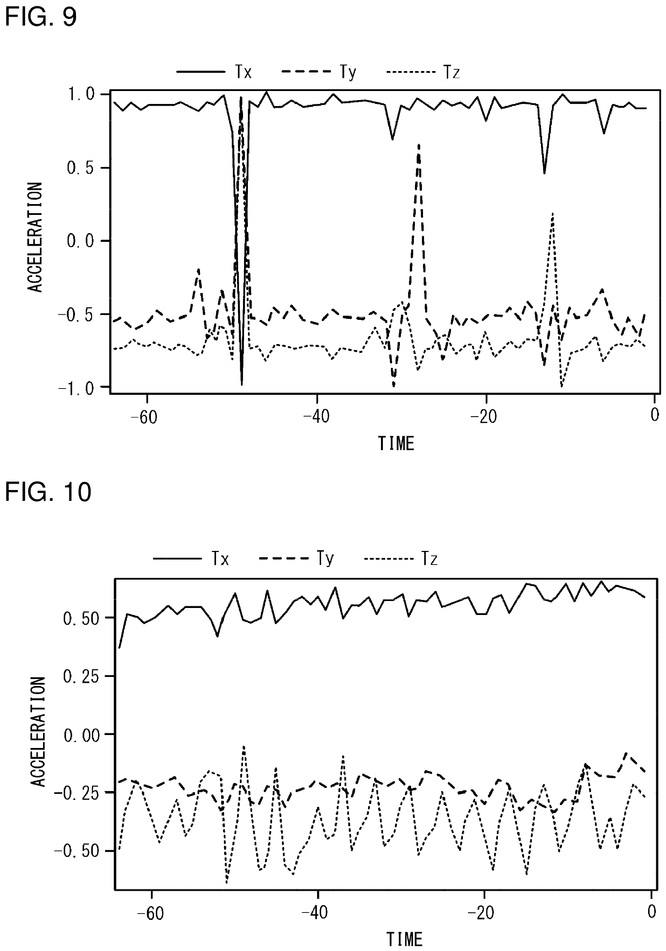

Fig. 9 is a graph showing the input data for acceleration measured by the failed sensor 20, and Fig. 10 is a graph showing reproduced data calculated by the arithmetic operation model 42b by referring to the input data of Fig. 9. The input data shown in Fig. 9 is normalized acceleration data Tx, Ty and Tz in the three axial directions. The reproduced data output by the arithmetic operation model 42b by referring to the input data from the failed sensor 20 is characterized by waveform fluctuations different from the characteristics of the input data and by errors increased as compared to the input data.

The normal range of a value obtained by adding up the absolute values of errors between the input data from the normally operating sensor 20 and the reproduced data calculated by the arithmetic operation model 42b is denoted by Rc. The abnormal range of a value obtained by adding up the absolute values of errors between the input data from the failed sensor 20 and the reproduced data calculated by the arithmetic operation model 42b is denoted by Re. The determination unit 43 sets a threshold value D between the normal range Rc and the abnormal range Re to determine whether the sensor 20 has failed. Even when the upper limit of the normal range Rc and the lower limit of the abnormal range Re overlap in part, the threshold value D can be set in consideration of the distribution of the normal range Rc and the abnormal range Re.

The sensor failure determination apparatus 40 codes the input data in the arithmetic operation model 42b by using a convolutional operation and reproduces the data by using an inverse operation. The sensor failure determination apparatus 40 can thus determine whether the sensor 20 has failed based on the input data and the reproduced data.

The arithmetic processing unit 42 can equalize the influence from the data in the respective axial directions in the failure determination by the determination unit 43, by normalizing, in the pre-processing unit 42a, the data acquired by the data acquisition unit 41.

The sensor 20 may measure a physical quantity in at least two of the three axial directions in the tire 10, and the determination unit 43 may make a determination on a failure in each axial direction. The sensor failure determination apparatus 40 can provide information indicating that some of the sensors 20 have failed. Even if some of the sensors 20 have failed, for example, the tire physical information estimation apparatus 30 can continue to estimate tire physical information based on data acquired from the normally operating sensor 20.

Alternatively, the sensor 20 may measure a physical quantity in at least two of the three axial directions in the tire 10, and the determination unit 43 may make one comprehensive determination by referring to the data in the respective axial directions. The sensor failure determination apparatus 40 can determine whether the input data in each axis direction input to the arithmetic operation model 42b is suitable for feature amount extraction from a comprehensive perspective.

A description will now be given of the features of the sensor failure determination apparatus 40 and the sensor failure determination method according to embodiment 1. The sensor failure determination apparatus 40 according to embodiment 1 includes the data acquisition unit 41, the arithmetic processing unit 42, and the determination unit 43. The data acquisition unit 41 acquires data for a physical quantity measured by the sensor 20 attached to the tire 10. The arithmetic processing unit 42 includes the coding unit 61 that generates feature amount data by applying a convolutional operation to the data acquired by the data acquisition unit 41, and the decoding unit 62 that reproduces data by applying an inverse operation to the feature amount data. The determination unit 43 determines whether the sensor 20 has failed based on the data acquired by the data acquisition unit 41 and the data reproduced by the arithmetic processing unit 42. Thereby, the sensor failure determination apparatus 40 can determine a failure of the sensor 20 provided in the tire 10.

Further, the arithmetic processing unit 42 includes the pre-processing unit 42a that normalizes the data acquired by the data acquisition unit 41. Thereby, the sensor failure determination apparatus 40 can equalize the influence from the data in the respective axial directions in the failure determination by the determination unit 43.

Further, the sensor 20 measures a physical quantity in at least two of the three axial directions in the tire 10. The determination unit 43 determines whether the sensor 20 has failed for each axial direction. Thereby, the sensor failure determination apparatus 40 can provide information indicating that some of the sensors 20 have failed.

Alternatively, the determination unit 43 makes a comprehensive determination as to whether the sensor 20 has failed by referring to the data in the respective axial directions. Thereby, the sensor failure determination apparatus 40 can determine whether the input data in each axis direction input to the arithmetic operation model 42b is suitable for feature amount extraction from a comprehensive perspective.

The sensor failure determination method includes a data acquisition step, an arithmetic processing step, and a determination step. The data acquisition step acquires data for the physical quantity measured by the sensor 20 attached to the tire 10. The arithmetic processing step executes a coding process that generates feature amount data by applying a convolutional operation to the data acquired by the data acquisition step, and a decoding process that reproduces the data by applying an inverse operation to the feature data. The determination step determines whether the sensor 20 has failed based on the data acquired by the data acquisition step and the data reproduced by the arithmetic processing step. According to this sensor failure determination method, it is possible to determine a failure of the sensor 20 provided in the tire 10.

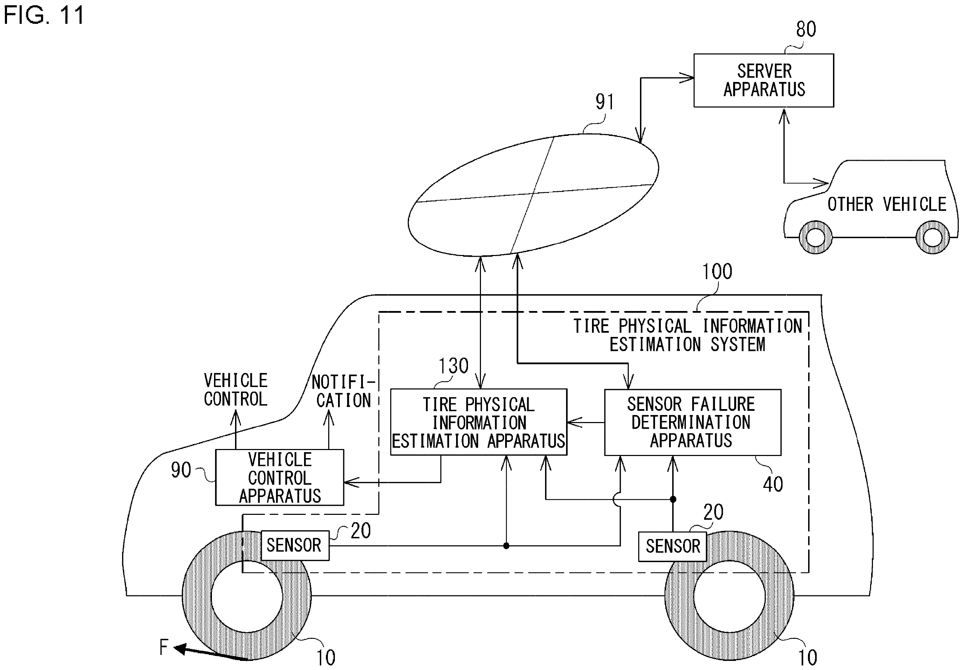

(Embodiment 2) The second invention will be described with reference to Figs. 11 to 17 based on a preferred embodiment.

Fig. 11 is a schematic diagram showing an outline of the tire physical information estimation system 100 according to embodiment 2. The tire physical information estimation system 100 includes the sensor 20 provided in the tire 10, a tire physical information estimation apparatus 130, and the sensor failure determination apparatus 40. The tire physical information estimation system 100 according to embodiment 2 is configured in the same manner as the tire physical information estimation system 100 described based on Fig. 1 in embodiment 1.

The sensor failure determination apparatus 40 determines whether the sensor 20 has failed by an arithmetic operation model that codes the data measured by the sensor 20 by using a convolutional operation and decodes the coded data. The sensor failure determination apparatus 40 also determines that the sensor 20 has failed when the output data is not normal data due to battery exhaustion of the sensor 20.

The tire physical information estimation apparatus 130 is notified by the sensor failure determination apparatus 40 of the determination result regarding sensor failure. When a failure occurs in some of the sensors 20, the tire physical information estimation apparatus 130 receives, from the sensor failure determination apparatus 40, an input of a determination result indicating that some of the sensors 20 have failed. The tire physical information estimation apparatus 30 replaces the tire physical information on the tire 10 equipped with the failed sensor 20 with an estimated value of the tire physical information based on the normally operating sensor 20 and continues to estimate the tire physical information. When the estimated value is substituted, the user is notified that the sensor 20 of the tire has failed or is exhausted.

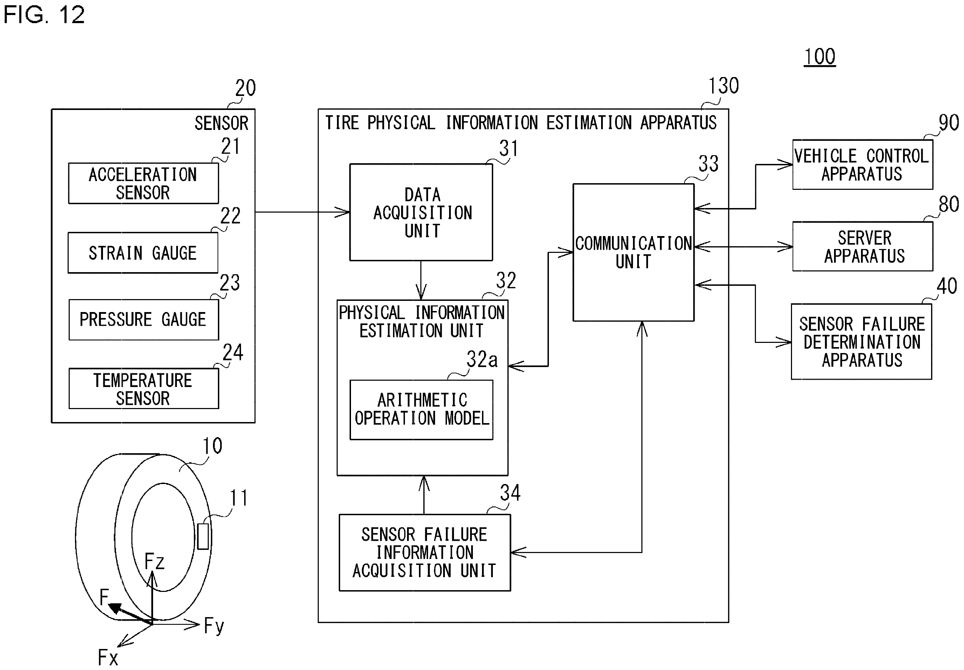

Fig. 12 is a block diagram showing a functional configuration of the tire physical information estimation apparatus 130 according to embodiment 2.

The tire physical information estimation apparatus 130 includes the data acquisition unit 31, a sensor failure information acquisition unit 34, the physical information estimation unit 32, and the communication unit 33. The tire physical information estimation apparatus 130 is an information processing apparatus such as a personal computer (PC). The units in the tire physical information estimation apparatus 130 can be realized in hardware by an electronic element such as a CPU of a computer, a machine component or the like, and in software by a computer program or the like. Fig. 12 depicts functional blocks implemented by the cooperation of these units. Therefore, it will be understood by those skilled in the art that the functional blocks may be implemented in a variety of manners by a combination of hardware and software.

The sensor failure information acquisition unit 34 acquires information indicating whether the sensor has failed from the sensor failure determination apparatus 40 via the communication unit 33 and outputs the information to the physical information estimation unit 32. The sensor failure information acquisition unit 34 acquires, for each sensor 20 attached to each of the plurality of tires 10 attached to the vehicle, information indicating whether there is a failure.

The sensor failure determination apparatus 40 outputs information indicating that the sensor 20 has failed, when the sensor 20 has failed due to disconnection, short circuit, damage to electronic components, or functional failure due to battery exhaustion, and the output data is deviated from the data in normal operation. The sensor failure determination apparatus 40 may have a failure detection function for detecting, for example, a disconnection and a short circuit. The sensor failure determination apparatus 40 may also have a function of monitoring the battery voltage supplied to the sensor 20 and detecting a voltage drop.

Alternatively, the sensor failure determination apparatus 40 may have a function of detecting a failure by referring to the data for the physical quantity measured by the sensor 20, by using an automatic encoder type learning model that uses a convolutional operation, etc. In the autoencoder type learning model using a convolutional operation, etc., feature amount data is generated from the data for the physical quantity measured by the sensor 20, the original data is reproduced from the feature amount data, and a failure of the sensor 20 is determined based on the reproducibility of the data.

The physical information estimation unit 32 includes the arithmetic operation model 32a, inputs the information from the data acquisition unit 31 to the arithmetic operation model 32a, and estimates the tire physical information such as the tire forces F and the moments around the three axes produced in the tire 10. As shown in Fig. 2, the tire force F has components in the three axial directions, i.e., a longitudinal force Fx in the longitudinal direction of the tire 10, a lateral force Fy in the lateral direction, and a load Fz in the vertical direction. The physical information estimation unit 32 may calculate all of these components in the three axial directions, calculate one of the components, or an arbitrary combination of two components.

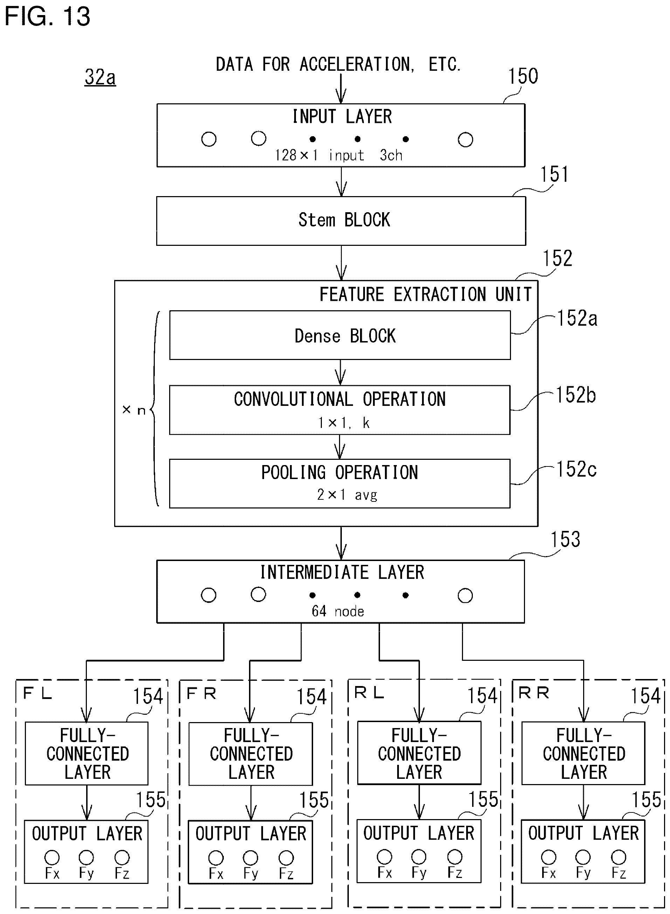

A learning type model such as a neural network is used for the arithmetic operation model 32a. Fig. 13 is a schematic diagram showing a configuration of the arithmetic operation model 32a. The arithmetic operation model 32a is of a convolutional neural network (CNN) type and is a learning type model provided with convolutional operation and pooling operation used in the so-called DenseNet, which is a prototype of CNN. Fig. 13 shows an example in which acceleration data in the three axial directions is used as input data input to the arithmetic operation model 32a, and the tire forces Fx, Fy, and Fz in the three axial directions are output.

The arithmetic operation model 32a is provided for each tire 10 attached to the vehicle. When the vehicle has front and rear axles, and one tire 10 each is attached on the left and right sides of the axle, for example, the physical information estimation unit 32 has four arithmetic operation models 32a corresponding to the four tires 10, respectively. A given arithmetic operation model 32a corresponding to a given tire 10 receives an input of the data for the physical quantity measured by the sensor 20 attached to the corresponding tire 10. The arithmetic operation model 32a estimates the tire physical information on the four tires 10 including the three other tires 10.

The arithmetic operation model 32a includes an input layer 150, a Stem block 151, a feature extraction unit 152, an intermediate layer 153, a fully-connected unit 154, and an output layer 155. Time series data for acceleration in the three axial directions acquired by the data acquisition unit 31 from the sensor 20 in the given tire 10 is input to the input layer 150. The acceleration data is measured by the sensor 20 on a time-series basis. Data for a predetermined time segment is extracted by a window function for use as the input data. The input data is assumed to be comprised of 128 items of acceleration data included in a predetermined time segment in each axial direction.

Acceleration measured in the tire 10 exhibits periodicity per rotation of the tire 10. The time segment of input data extracted by the window function may be a period of time corresponding to the period of rotation of the tire 10 to impart the input data itself with a periodicity. The window function may extract input data in a time segment shorter or longer than one rotation of the tire 10. The arithmetic operation model 32a can be trained so long as the extracted input data at least includes periodical information.

The STEM block 151 reduces the size (the number of items) of the input data while maintaining the characteristics of the input data. For example, a convolutional operation, a pooling operation, etc. are executed in the STEM block 151.

The feature extraction unit 152 repeatedly runs a Dense block 152a, a convolutional operation 152b, and a pooling operation 152c a plurality of times (n times, according to the illustration in Fig. 13) to extract the feature amount and transmits the feature amount to the nodes of the middle layer 153. In the example of the feature extraction unit 152 shown in Fig. 13, a convolutional operation having an appropriate filter length is applied to the input data in the Dense block 152a, and the convolutional operation 152b and the pooling operation 152c that follow are executed.

In the convolutional operation in the Dense block 152a, a filter having a length of about 1 to 5 is used as appropriate. The input data arranged in a time sequence are multiplied by filter values as the filter is moved, and the resultant values are added up. The convolutional operation is executed such that, of the time series input data, continuous data as long as the filter length (e.g., Al, A2, A3) are multiplied by values (f1, f2, f3) in the filters, respectively. The values obtained by the multiplication are added up to obtain A1×f1+A2×f2+A3×f3. Zero padding, whereby "0" data is appended to the end of the input data, may be executed to execute the convolutional operation. The amount of movement of the filter in the convolutional operation is, normally, one item of input data but may be modified as appropriate to reduce the scale of the arithmetic operation model 32a.

The convolutional operation 152b executes a convolutional operation having a filter length of 1. The pooling operation 152c executes an average pooling operation on the data from the convolutional operation 152b. The pooling operation 152c obtains, for example, an average of two values arranged in a time sequence. The feature extraction unit 152 repeats the operation by the Dense block 152a, the convolutional operation 152b, and the pooling operation 152c a plurality of times, and outputs 64 items of data, which indicates the results, to the intermediate layer 153.

The fully-connected unit 154 fully connects the data from the nodes of the intermediate layer 153 in a plurality of layers and outputs the tire forces Fx, Fy, and Fz to the nodes of the output layer 155. The fully-connected unit 154 executes an operation via fully-connected paths on which weighted liner operation, etc. is executed. In addition to a linear operation, the fully-connected unit 154 may execute a non-linear operation by using an activating function, etc.

In addition to the tire forces in the three axial directions, the tire physical information such as the moments around the three axes produced in the tire 10 may be output to the nodes of the output layer 155. Of the tire physical information such as the tire forces in the three axial directions and the moments around the three axes produced in the tire 10, the output layer 155 may output one type of tire physical information or an arbitrary combination of a plurality of types of tire physical information.

The number of fully-connected units 154 and output layers 155 is equal to the number of tires 10 attached to the vehicle. In the example shown in Fig. 3, the fully connected units 154 and the output layers 155 corresponding to the left front wheel (FL), right front wheel (FR), left rear wheel (RL) and right rear wheel (RR) of the vehicle are provided.

Further, the arithmetic operation model 32a can be trained by mounting, to an actual vehicle, the tire 10 of a specification adapted to the vehicle and by test driving the vehicle. The specification of the tire 10 includes information related to tire performance such as tire size, tire width, tire profile, tire strength, tire outer diameter, road index, and year/month/date of manufacturing.

When sensor failure information is input from the sensor failure information acquisition unit 34, the physical information estimation unit 32 stops estimation of tire physical information by the arithmetic operation model 32a corresponding to the tire 10 equipped with the failed sensor 20. When, for example, the sensor 20 corresponding to the right front wheel fails, the physical information estimation unit 32 stops estimating tire physical information by the arithmetic operation model 32a corresponding to the tire 10 of the right front wheel. The physical information estimation unit 32 estimates tire physical information produced in the tire 10 of the right front wheel by the arithmetic operation model 32a corresponding to a further tire 10 such as that of the left front wheel.

The physical information estimation unit 32 estimates the tire physical information on the tire 10 corresponding to the failed sensor 20 by using one of the arithmetic operation models 32a of the further tires 10 attached to the vehicle. The physical information estimation unit 32 may estimate the tire physical information on the tire 10 corresponding to the failed sensor 20, based on the arithmetic operation model 32a in the tire 10 provided in the same axle of the vehicle. The physical information estimation unit 32 may estimate the tire physical information on the tire 10 corresponding to the failed sensor 20, based on the arithmetic operation model 32a in the tire 10 provided on the same side of the vehicle in the lateral direction.

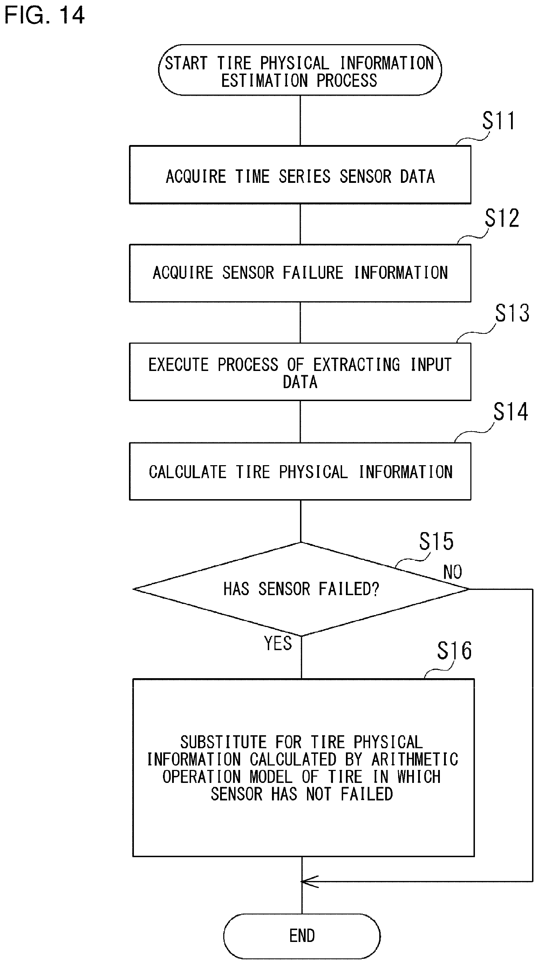

A description will now be given of the operation of the tire physical information estimation system 100. Fig. 14 is a flowchart showing a sequence of steps of the tire physical information estimation process executed by the tire physical information estimation apparatus 130. The tire physical information estimation apparatus 130 acquires time-series data for physical quantities such as acceleration, strain, tire inflation pressure, and tire temperature in the tire 10 measured by the sensor 20, by using the data acquisition unit 31 (S11). The sensor failure information acquisition unit 34 acquires information about the failure of the sensor 20 from the sensor failure determination apparatus 40 (S12).

The physical information estimation unit 32 extracts input data in a predetermined time segment from the data acquired by the data acquisition unit 31 (S13). For estimation of tire physical information, acceleration data for at least one axis (e.g., circumferential direction) is required as input data. Alternatively, acceleration data for two axes (e.g., the circumferential and axial directions) in the tire 10 may be used as input data, or acceleration data for three axes may be used as input data in the estimation of tire physical information. Furthermore, time series data for at least one of strain, tire inflation pressure, and tire temperature in the tire 10 may be included in the input data.

The physical information estimation unit 32 inputs the input data extracted in step S13 to the arithmetic operation model 32a and calculates tire physical information such as the tire forces F and the moments around the three axes produced in the tire 10 (S14). The physical information estimation unit 32 determines whether the sensor 20 has failed (S15) based on the information acquired by the sensor failure information acquisition unit 34 and ends the process when it is determined that the sensor has not failed (S15: No) .

When it is determined that the sensor 20 has failed in step S15 (S15: Yes), the physical information estimation unit 32 replaces the tire physical information on the tire 10 associated with the failed sensor 20 with the tire physical information calculated by the arithmetic operation model 32a in the tire 10 equipped with the sensor 20, for which information indicating an absence of failure been acquired (S16). The physical information estimation unit 32 then ends the process.

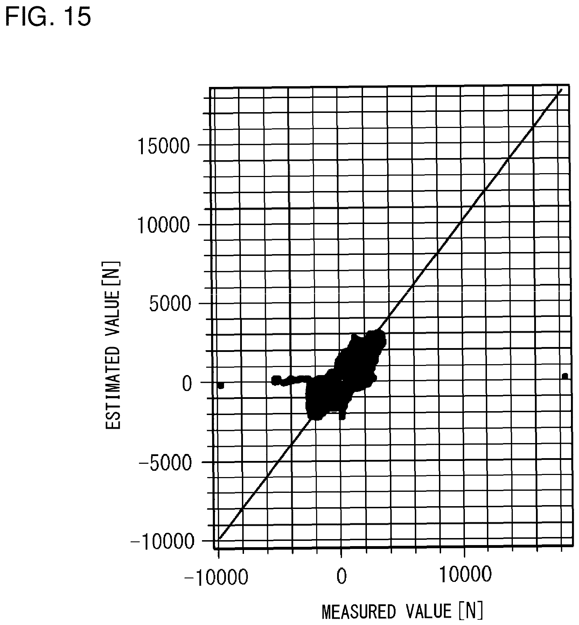

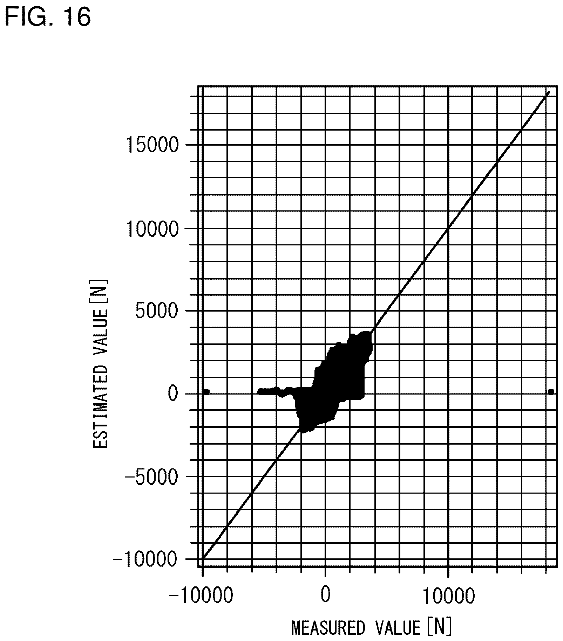

Fig. 15 is an exemplary diagram showing correlation between the estimated value and the measured value of the tire force Fy of the tire 10 of the left front wheel calculated by the arithmetic operation model 32a of the tire 10 of the left front wheel. Fig. 16 is an exemplary diagram showing correlation between the estimated value and the measured value of the tire force Fy of the tire 10 of the left front wheel calculated by the arithmetic operation model 32a of the tire 10 of the right front wheel. The correlation between the estimated value and the measured value of the tire force Fy shown in Fig. 15 shows generally the same distribution as the correlation between the estimated value and the measured value of the tire force Fy shown in Fig. 16. It can be learned, from these exemplary correlation diagrams, that, when the sensor 20 fails in the tire 10 of the left front wheel, the estimated value of the tire force Fy in the tire 10 of the left front wheel can be replaced with the tire force Fy in the tire 10 of the left front wheel calculated by the arithmetic operation model 32a of the tire 10 of the right front wheel.

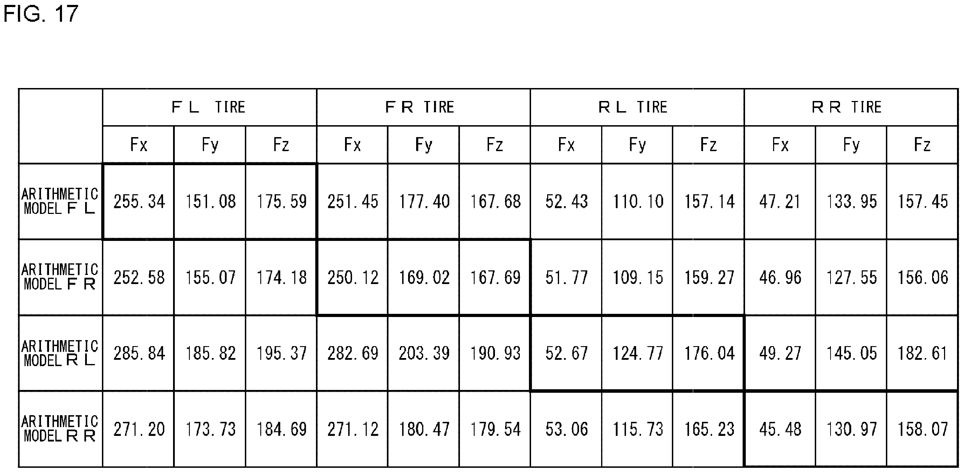

Fig. 17 is a table showing average absolute errors between the estimated values and the measured values of the tire forces F of all tires calculated by the arithmetic operation models corresponding to the respective tires of the vehicle. Referring to Fig. 17, the vehicle is equipped with four tires 10, namely, the left front wheel (FL), right front wheel (FR), left rear wheel (RL), and right rear wheel (RR) tires. The arithmetic operation models corresponding to the respective tires are indicated as the arithmetic operation model FL, the arithmetic operation model FR, etc.

For example, the arithmetic operation model FL receives an input of data for the physical quantity measured by the sensor 20 attached to the tire 10 of the left front wheel (FL) and estimates the tire forces F of the left front wheel, right front wheel, left rear wheel, and right rear wheel. The average absolute errors between the estimated values estimated by the arithmetic operation model FL and the measured values are calculated as 255.34, 151.08 and 175.59 for the tire forces Fx, Fy and Fz of the left front wheel, respectively.

The average absolute errors between the estimated values estimated by the arithmetic operation model FR corresponding to the right front wheel and the measured values are calculated as 252.58, 155.07 and 174.18 for the tire forces Fx, Fy and Fz of the left front wheel, respectively, which values are similar to those of the arithmetic operation model FL. This shows that, even if the arithmetic operation model in one tire 10 cannot correctly estimate tire physical information due to sensor failure, it is possible to substitute the tire physical information estimated based on the arithmetic operation model in another tire 10.

The tire physical information estimation system 100 can continue to estimate tire physical information related to the tire 10 even when some of the sensors 20 have failed, by estimating the tire physical information on the tire 10 equipped with the sensor 20, for which the sensor failure information acquisition unit 34 has acquired information indicating a failure, based on the arithmetic operation model 32a in the tire 10 equipped with the sensor 20, for which information indicating an absence of failure is acquired.

The physical information estimation unit 32 may estimate the tire physical information on the tire 10 equipped with the failed sensor 20, based on the arithmetic operation model 32a in the tire 10 provided in the same axle of the vehicle. The tire physical information estimation system 100 can ensure to equalize the influence of vehicle steering, etc. and increase the accuracy of estimation of tire physical information, by using the estimated value estimated by the arithmetic operation model 32a in the tire 10 provided in the same axle.

The physical information estimation unit 32 may estimate the tire physical information on the tire 10 equipped with the failed sensor, based on the arithmetic operation model of the tire 10 provided on the same side of the vehicle in the lateral direction. The tire physical information estimation system 100 can equalize the influence of the surface of the road passed by the vehicle traveling and increase the accuracy of estimation of tire physical information, by using the estimated values based on the arithmetic operation model 32a in the tire 10 provided on the same side of the vehicle in the lateral direction.

In the embodiment described above, the CNN type DenceNet model is used in the arithmetic operation model 32a. Alternatively, a model structure such as the LeNet model, ResNet model, MobileNet model, and PeleelNet model may be used. A module structure such as Residual Block may be incorporated into the arithmetic operation model 32a to build the model.

A description will now be given of the features of the tire physical information estimation system 100 and the tire physical information estimation method according to embodiment 2. The tire physical information estimation system 100 according to embodiment 2 includes the data acquisition unit 31, the physical information estimation unit 32, and the sensor failure information acquisition unit 34. The data acquisition unit 31 acquires data for the physical quantity measured by the sensors 20 attached to a plurality of tires 10 attached to the vehicle. The physical information estimation unit 32 receives an input of the data acquired by the data acquisition unit 31 and uses the arithmetic operation model 32a that has been trained for each tire 10 to estimate, for the tire 10 and a further tire 10, the tire physical information produced in association with the movement of the tire 10. The sensor failure information acquisition unit 34 acquires information indicating whether the sensor 20 has failed. The physical information estimation unit 32 estimates the tire physical information on the tire 10 equipped with the sensor 20, for which the sensor failure information acquisition unit 34 has acquired information indicating a failure, based on the arithmetic operation model 32a in the tire 10 equipped with the sensor 20, for which information indicating an absence of failure is acquired. Thereby, the tire physical information estimation system 100 can continue to estimate tire physical information related to the tire 10 even when some sensors 20 have failed.

The physical information estimation unit 32 estimates the tire physical information on the tire 10 equipped with the sensor 20, for which the sensor failure information acquisition unit 34 has acquired information indicating a failure, based on the arithmetic operation model 32a in the tire 10 provided in the same axle of the vehicle. Thereby, the tire physical information estimation system 100 can increase the accuracy of estimation of tire physical information, by using, in estimating tire physical information, the estimated value influenced equally by steering, etc.

Further, the physical information estimation unit 32 estimates the tire physical information on the tire 10 equipped with the sensor 20, for which the sensor failure information acquisition unit 34 has acquired information indicating a failure, based on the arithmetic operation model 32a in the tire 10 provided on the same side of the vehicle in the lateral direction. Thereby, the tire physical information estimation system 100 can increase the accuracy of estimation of tire physical information, by using, in estimating tire physical information, the estimated value substantially equally influenced by the surface of the road passed by the vehicle traveling.

The tire physical information estimation method includes a data acquisition step, a physical information estimation step, and a sensor failure information acquisition step. The data acquisition step acquires data for the physical quantity measured by the sensors 20 attached to a plurality of tires 10 attached to the vehicle. The physical information estimation step receives an input of the data acquired by the data acquisition step and uses the arithmetic operation model 32a that has been trained for each tire 10 to estimate, for the tire 10 and a further tire 10, the tire physical information produced in association with the movement of the tire 10. The sensor failure information acquisition step acquires information indicating whether the sensor 20 has failed. The physical information estimation step estimates the tire physical information on the tire 10 equipped with the sensor 20, for which the sensor failure information acquisition step has acquired information indicating a failure, based on the arithmetic operation model in the tire 10 equipped with the sensor 20, for which information indicating an absence of failure is acquired. According to this tire physical information estimation method, it is possible to continue to estimate tire physical information related to the tire 10 even when some of the sensors 20 have failed.

Further, the tire physical information estimation system includes the data acquisition unit 31 and the physical information estimation unit 32. The data acquisition unit 31 acquires data for the physical quantity measured by the sensor 20 attached to a given tire 10 attached to a vehicle. The physical information estimation unit 32 receives an input of the data acquired by the data acquisition unit 31 and uses the trained arithmetic operation model 32a to estimate, for the given tire 10 and a further tire 10, the tire physical information produced in association with the movement of the tire 10. Thereby, the tire physical information estimation system 100 can estimate the tire physical information on the further tire 10 by the arithmetic operation model 32a corresponding to the tire 10 equipped with the sensor 20.

Described above is an explanation based on an embodiment. The embodiments are intended to be illustrative only and it will be understood to those skilled in the art that variations and modifications are possible within the claim scope of the present invention and that such variations and modifications are also within the claim scope of the present invention. Accordingly, the description and drawings in the specification shall be interpreted as being illustration instead of limitation.

10 tire, 20 sensor, 21 acceleration sensor, 31 data acquisition unit, 32 physical information estimation unit, 32a arithmetic operation model, 34 sensor failure information acquisition unit, 40 sensor failure determination apparatus, 41 data acquisition unit, 42 arithmetic processing unit, 42a pre-processing unit, 42b arithmetic operation model, 43 determination unit, 44 communication unit, 61 coding unit, 62 decoding unit, 90 vehicle control apparatus, 100 tire physical information estimation system.

The present invention relates to a sensor failure determination apparatus, sensor failure determination method, a tire physical information estimation system and tire physical information estimation method.

## Claims

1. A sensor failure determination apparatus (40) comprising:
a data acquisition unit (41) that acquires data for a physical quantity measured by a sensor (20) attached to a tire (10);
an arithmetic processing unit (42) that includes a coding unit (61) that generates feature amount data by applying a convolutional operation to the data acquired by the data acquisition unit (41), and a decoding unit (62) that applies an inverse operation to the feature amount data to reproduce data; and
a determination unit (43) that determines whether the sensor (20) has failed based on the data acquired by the data acquisition unit (41) and the data reproduced by the arithmetic processing unit (42).

2. The sensor failure determination apparatus (40) according to claim 1, wherein
the arithmetic processing unit (42) includes a pre-processing unit (42a) that normalizes the data acquired by the data acquisition unit (41).

3. The sensor failure determination apparatus (40) according to claim 1 or 2, wherein
the sensor (20) measures a physical quantity in at least two of three axial directions in the tire (10), and
the determination unit (43) makes a determination in each axial direction.

4. The sensor failure determination apparatus (40) according to claim 1 or 2, wherein
the sensor (20) measures a physical quantity in at least two of three axial directions in the tire (10), and
the determination unit (43) makes a comprehensive determination by referring to the data in respective axial directions.

5. The sensor failure determination apparatus (40) according to any one of claims 1 through 4, further comprising:
a communication unit (44) that, when the determination unit (43) determines that the sensor (20) has failed, transmits a determination of a failure of the sensor (20) to an external apparatus.

6. The sensor failure determination apparatus (40) according to claim 5, wherein
the external apparatus is a vehicle control apparatus (90), and
the vehicle control apparatus (90) notifies a driver of the failure of the sensor (20).

7. The sensor failure determination apparatus (40) according to any one of claims 1 through 6, wherein
the determination unit (43) determines that the sensor (20) is operating normally when a sum of absolute values of errors between input data acquired by the data acquisition unit (41) and reproduced data output from the arithmetic processing unit (42) is less than a predetermined threshold value.

8. The sensor failure determination apparatus (40) according to any one of claims 1 through 7, wherein
the sensor (20) includes an acceleration sensor (21) capable of measuring an acceleration in at least two axial directions.

9. The sensor failure determination apparatus (40) according to claim 8, wherein
the sensor (20) is capable of measuring data for at least one of tire strain, tire inflation pressure, or tire temperature.

10. A sensor failure determination method comprising:
data acquisition acquiring data for a physical quantity measured by a sensor (20) attached to a tire (10);
arithmetic processing that includes coding that generates feature amount data by applying a convolutional operation to the data acquired by the data acquisition, and decoding that applies an inverse operation to the feature amount data to reproduce data; and
sensor failure determination that determines whether the sensor (20) has failed based on the data acquired by the data acquisition and the data reproduced by the arithmetic processing.

11. A tire physical information estimation system (100) comprising:
a data acquisition unit (31) that acquires data for a physical quantity measured by sensors (20) attached to a plurality of tires (10) attached to a vehicle;
a physical information estimation unit (32) that receives an input of the data acquired by the data acquisition unit (31) and uses an arithmetic operation model (32a) that has been trained for each tire (10) to estimate, for a given tire and a further tire, tire physical information produced in association with a movement of the tire (10); and
a sensor failure information acquisition unit (34) that acquires information indicating whether a sensor (20) has failed,
wherein the physical information estimation unit (32) estimates the tire physical information on the tire (10) equipped with the sensor (20), for which the sensor failure information acquisition unit (34) has acquired information indicating a failure, based on the arithmetic operation model (32a) in the tire (10) equipped with the sensor (20), for which information indicating an absence of failure is acquired.

12. The tire physical information estimation system (100) according to claim 11,
wherein the physical information estimation unit (32) estimates the tire physical information on the tire (10) equipped with the sensor (20), for which the sensor failure information acquisition unit (34) has acquired information indicating a failure, based on the arithmetic operation model (32a) in the tire (10) provided in the same axle of the vehicle.

13. The tire physical information estimation system (100) according to claim 11,
wherein the physical information estimation unit (32) estimates the tire physical information on the tire (10) equipped with the sensor (20), for which the sensor failure information acquisition unit (34) has acquired information indicating a failure, based on the arithmetic operation model (32a) in the tire (10) provided on the same side of the vehicle in a lateral direction.

14. The tire physical information estimation system (100) according to any one of claims 11 through 13,
the sensor failure information acquisition unit (34) determines that the sensor (20) has failed when the data acquisition unit (31) does not acquire data for a physical quantity from the sensor (20).

15. The tire physical information estimation system (100) according to claim 11,
wherein, when the sensor failure information acquisition unit (34) acquires information indicating a failure, an estimation process of estimating tire physical information based on the arithmetic operation (32a) is stopped.
